# DEMANDE DE BREVET EUROPEEN

(11) **EP 4 838 434 A1**
(43) Date de publication de la demande: **11.11.2026**
(21) Numéro de dépôt: 26177100.0
(22) Date de dépôt: 07.05.2026
(51) Int. Cl.: G06Q 10/063, G06Q 50/06

(54) **PROCÉDÉ DE CLASSIFICATION D'USAGES DE L EAU, ET PROGRAMME D ORDINATEUR, SYSTÈME DE CLASSIFICATION ET PROCÉDÉ DE TRAITEMENT DE DONNÉES ASSOCIÉS**

(30) Priorité: 09.05.2025 FR 2504924
(71) Demandeur: Hydrelis, 62360 Isques (FR)
(72) Inventeur: CHATELARD, Philippe, 62360 ISQUES (FR); RINGOT, Arthur, 62360 ISQUES (FR)
(74) Mandataire: Lavoix

(57) **Abrégé**

La présente invention concerne un procédé de classification d'usages de l'eau d'au moins un objet de consommation, comprenant les étapes suivantes :
- obtention (210) d'une série temporelle de points de consommation, chaque point de consommation comprenant des données de consommation d'eau relatives à l'objet de consommation comprenant une date, un débit stabilisé et un volume de l'eau consommée, le débit stabilisé étant calculé à partir d'un nombre minimal d'impulsions temporelles successives émise sensiblement avec sensiblement une même fréquence par un compteur de consommation d'eau associé à l'objet de consommation, chaque impulsion représentant la consommation d'un volume prédéfini d'eau ;
- traitement (220) des points de consommation pour déterminer des usages de l'eau.

## Description

La présente invention concerne un procédé de classification d'usages de l'eau.

La présente invention concerne également un système de classification mettant en œuvre un tel procédé de classification ainsi qu'un programme d'ordinateur associé.

La présente invention concerne enfin un procédé de traitement de données associé à ce procédé de classification.

Le domaine technique de l'invention est celui de préservation des ressources naturelles ainsi que la limitation de la consommation d'eau.

Un moyen efficace de parvenir à la limitation de la consommation d'eau consiste à classifier les usages de l'eau, afin de quantifier les consommations respectives de différents usages. Ceci permet à la fois de supprimer les usages indésirables tels que les fuites et micro-fuites, et d'identifier les usages les plus consommateurs, pour permettre aux utilisateurs de focaliser leurs efforts de réduction de la consommation d'eau sur les usages les plus importants.

La classification des usages de l'eau a été rendue possible grâce notamment à l'utilisation de compteurs de consommation d'eau, dits intelligents.

En particulier, de tels compteurs de consommation sont généralement munis des moyens de transmission permettant de transmettre à des serveurs centralisés l'information relative à la consommation d'eau. Ces informations peuvent ensuite être traitées par différents algorithmes pour déterminer au moins certains usages de l'eau.

Ainsi, on connait le document WO2023/105014 décrivant en détail une méthode de classification qui est basée sur le traitement des impulsions transmises par les compteurs d'eau aux serveurs centralisés.

Chaque impulsion correspond généralement à un volume prédéterminé d'eau consommée.

Ainsi, le traitement de l'ensemble des impulsions reçues en relation avec un même compteur permet non seulement de déterminer le volume total d'eau consommée mais également de déterminer certains usages lors de cette consommation.

La méthode de classification du document précité peut toutefois être améliorée en termes de précision de détermination de différents usages de l'eau.

La présente invention a pour but de proposer des moyens permettant de classifier des usages de l'eau de manière particulièrement précise et peu coûteuse.

À cet effet, l'invention concerne un procédé de classification d'usages de l'eau d'au moins un objet de consommation, comprenant les étapes suivantes :
- obtention d'une série temporelle de points de consommation, chaque point de consommation comprenant des données de consommation d'eau relatives à l'objet de consommation comprenant une date, un débit stabilisé et un volume de l'eau consommée, le débit stabilisé étant calculé à partir d'un nombre minimal d'impulsions temporelles successives émises avec sensiblement une même fréquence par un compteur de consommation d'eau associé à l'objet de consommation, chaque impulsion représentant la consommation d'un volume prédéfini d'eau ;
- traitement des points de consommation pour déterminer des usages de l'eau.

Le procédé de classification selon l'invention permet alors de classifier des usages de l'eau non directement à partir des impulsions transmises par les compteurs d'eau mais à partir des informations relatives au débit stabilisé de l'eau.

Il a été en effet découvert par les inventeurs que les informations sur le débit stabilisé présentent une plus grande valeur ajoutée par rapport aux simples impulsions et permettent notamment d'éviter l'utilisation des impulsions qui sont relatives au débit non-stabilisé qui peuvent apparaitre de manière aléatoire dans le réseau de distribution d'eau.

Selon d'autres aspects avantageux de l'invention, le procédé de classification comprend une ou plusieurs des caractéristiques suivantes prises isolément ou suivant toutes les combinaisons techniquement possibles :
- l'étape de traitement comprend les sous-étapes suivantes :
   - détermination de points de consommation isolés ;
   - à chaque point de consommation isolé, association d'un usage le plus probable ;
- chaque point de consommation isolé est déterminé en comparant l'espacement temporel de ce point de consommation avec d'autres points de consommation, avec un seuil d'espacement prédéterminé ;
- l'étape de traitement comprend en outre les sous-étapes suivantes :
   - constructions de patterns de consommation à partir d'au moins deux points de consommation présentant un espacement temporel inférieur à un seuil d'espacement prédéterminé ;
   - pour chaque pattern de consommation comprenant au moins une superposition de débits stabilisés, dissociation du pattern de consommation en au moins deux patterns de consommation sans superposition ;
   - partitionnement de patterns de consommation pour obtenir une pluralité de grappes ;
   - association d'au moins certaines des grappes à un usage de l'eau le plus probable ;
- ladite dissociation du pattern de consommation en au moins deux patterns de consommation sans superposition s'effectue par détermination de toutes les combinaisons possibles de sous-patterns sans superposition ;
- l'étape de traitement comprend en outre une sous-étape de tri des patterns de consommation en fonction de la taille de ces patterns ;
- le partitionnement est effectué par une technique de partitionnement hiérarchique comprenant le calcul de distances entre les patterns de consommation voisinant après le tri ;
- les grappes de taille supérieure à un seuil prédéterminé sont associées à des usages.

La présente invention concerne également un programme d'ordinateur comprenant des instructions logicielles qui lorsqu'elles sont exécutées par un ordinateur, mettent en œuvre le procédé de classification tel que défini ci-dessus.

L'invention concerne également un système de classification comprenant des moyens techniques configurés pour mettre en œuvre le procédé de classification tel que défini ci-dessus.

L'invention concerne enfin un procédé de traitement de données relatives à la consommation de l'eau d'au moins un objet de consommation, comprenant les étapes suivantes :
- analyse des impulsions issues d'un compteur de consommation d'eau associé à l'objet de consommation pour détecter des débits stabilisés, chaque impulsion représentant la consommation d'un volume prédéfini d'eau ;
- pour chaque débit stabilisé, détermination d'un point de consommation comprenant la date de ce débit stabilisé, ce débit stabilisé et un volume de l'eau consommée ;
- transmission d'une série temporelle de points de consommation ;
- mise en œuvre du procédé de classification tel que défini ci-dessus.

L'invention apparaitra plus clairement à la lecture de la description qui va suivre, donnée uniquement à titre d'exemple non-limitatif, et faite en référence aux dessins annexés sur lesquels :
[Fig. 1] la figure 1 est une vue schématique d'un système de classification selon l'invention ;
[Fig. 2] la figure 2 est un organigramme d'un procédé de traitement de données mis en œuvre partiellement par le système de classification de la figure 1 ;
[Fig. 3] la figure 3 est un organigramme d'un procédé de classification selon l'invention, le procédé de classification étant mis en œuvre par le système de classification de la figure 1 ; et
[Fig. 4] [Fig. 5] [Fig. 6] les figures 4 à 6 sont différents schémas illustrant la mise en œuvre de l'un des procédés des figures 2 et 3.

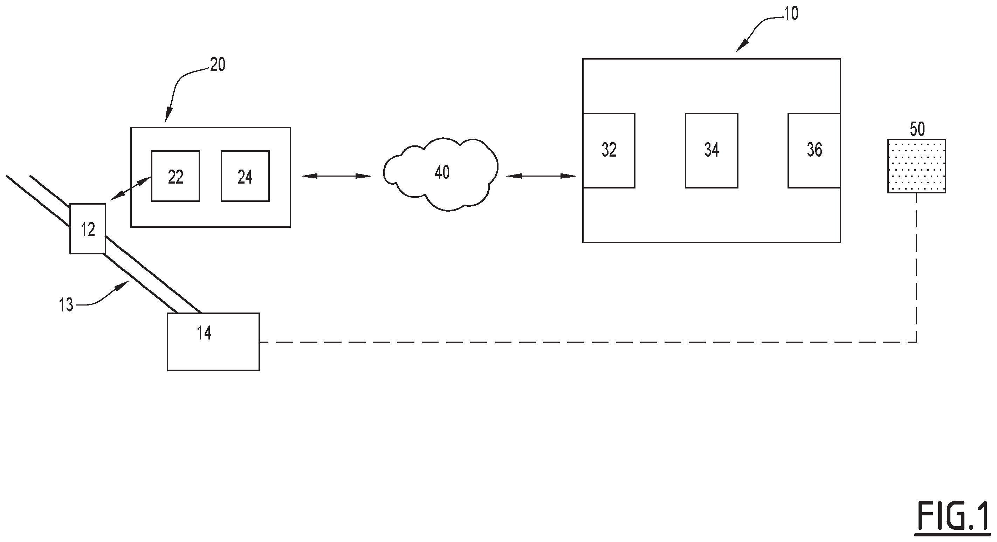

On a en effet illustré sur la figure 1 un système de classification 10 permettant de classifier des usages de l'eau.

En particulier, ce système de classification 10 est associé à au moins un compteur d'eau 12 qui est associé à la canalisation d'arrivée d'eau 13 d'un objet de consommation 14.

L'objet de consommation 14 présente par exemple un appartement, une maison, une villa, un objet industriel, une grande surface, ou tout autre endroit dans lequel s'effectue la consommation d'eau issue de la canalisation 13. L'objet de consommation 14 est ainsi associé à un ou plusieurs utilisateur(s) consommant de l'eau issue de la canalisation 13.

Avantageusement, les utilisateurs de l'objet de consommation 14 forment un même ménage.

Le compteur d'eau 12 permet de déterminer le volume d'eau passant par la canalisation d'arrivée d'eau 13 vers l'objet de consommation 14.

Ce compteur 12 présente par exemple un compteur connu en soi permettant d'afficher sur un afficheur un volume d'eau consommée par l'objet de consommation 14 à partir d'un point de référence.

En outre, le compteur d'eau 12 comprend un système de prétraitement 20 permettant de prétraiter et de transmettre des données relatives à la consommation d'eau par l'objet de consommation 14 au système de classification 10.

À cet effet, le système de prétraitement 20 comprend par exemple un module d'émission d'impulsion 22 et un module de calcul 24.

Le module d'émission d'impulsion 22 est associé directement à la canalisation d'arrivée d'eau 13 et permet d'émettre une impulsion lorsqu'un volume d'eau prédéterminé passe à travers cette canalisation 13.

Ce volume prédéterminé est connu d'avance et correspond par exemple à un litre d'eau consommée.

Pour émettre une telle impulsion, le module d'émission d'impulsion 22 comprend par exemple une partie mécanique mobile permettant de détecter le déplacement de l'eau dans la canalisation 13. Alternativement, le module d'émission d'impulsion 22 est connecté à l'afficheur et permet d'émettre une impulsion à au moins certains changements affectant l'afficheur.

Les impulsions émises par le module d'émission d'impulsion 22 sont par exemple analogiques.

Dans un mode de réalisation alternatif, à la place du module d'émission d'impulsion 22, le système de prétraitement 20 peut avoir un débitmètre permettant de mesurer le début d'eau dans la canalisation 13 selon toute technique connue en soi et de transmettre ces données au module de calcul 24. Dans la suite de la description, toute référence faite à une impulsion transmise par le module d'émission d'impulsion 22 peut également signifier une donnée transmise par le débitmètre, selon le mode de réalisation alternatif.

Le module de calcul 24 est raccordé directement au module d'émission d'impulsion 22 et permet de recevoir et de prétraiter les impulsions émises par le module d'émission d'impulsion 22.

À partir de ces impulsions, le module de calcul 24 permet de générer des points de consommation tels qu'ils seront expliqués plus en détail par la suite.

Enfin, le module de calcul 24 permet de transmettre les points de consommation générés au système de classification 10.

Le module de calcul 24 se présente par exemple au moins partiellement sous la forme d'un logiciel mis en œuvre par un processeur faisant également partie du système de prétraitement 20.

Alternativement ou en complément, le module de calcul 24 se présente au moins partiellement sous la forme d'un circuit logique programmable du type FPGA (de l'anglais *Field-Programmable Gate Array).*

Le système de classification 10 comprend un module d'entrée 32, un module de traitement 34 et un module de sortie 36.

Avantageusement, ce système de classification 10 est associé à plusieurs modules de prétraitement 20, c'est-à-dire à plusieurs compteurs d'eau 12 et à plusieurs objets de consommation 14, tels qu'expliqués précédemment.

Le module d'entrée 32 permet de recevoir l'ensemble des informations transmises par les différents systèmes de prétraitement 20.

À cet effet, le module d'entrée 32 est avantageusement raccordé à chacun de ces systèmes de prétraitement 20, par exemple par un réseau informatique 40. Le réseau informatique 40 peut former un réseau local ou un réseau global tel qu'internet. Dans certains modes de réalisation, le module d'entrée 32 peut être raccordé directement par exemple par câble, à au moins certains systèmes de prétraitement 20.

Le module de traitement 34 permet de traiter les points de consommation transmis par chacun des systèmes de prétraitement 20 afin de déterminer des usages de l'eau relatifs à ces points de consommation de chacun des objets de consommation 14.

Ce traitement sera expliqué plus en détail par la suite.

Enfin, le module de sortie 36 permet de délivrer les usages déterminés par le module de traitement 34 en relation avec chacun des objets de consommation 14 à tout système 50 intéressé.

Ce système intéressé 50 peut présenter par exemple une interface de communication avec l'objet de consommation 14 correspondant. Cela peut par exemple comprendre un ordinateur ou un téléphone mobile de l'un des utilisateurs de l'objet de consommation 14.

Cette interface 50 est configurée notamment pour afficher les différents usages associés à des différents volumes d'eau et éventuellement à la date de ces usages.

L'interface 50 peut présenter encore d'autres fonctionnalités relatives aux usages déterminés telles que par exemple des conseils personnalisés déterminés suite à ces différents usages.

Chacun des modules 32 à 36 se présente avantageusement au moins partiellement sous la forme d'un logiciel mis en œuvre par un ou plusieurs processeur(s) compris dans le système de classification 10.

Alternativement ou de manière complémentaire, au moins certains de ces modules 32 à 36 se présentent au moins partiellement sous la forme d'un circuit logique programmable tel qu'un circuit de type FPGA.

Selon un autre exemple de réalisation (non illustré sur les figures), le module de calcul 24 tel qu'expliqué précédemment fait partie du système de classification 10.

Dans un tel cas, ce module du calcul 24 est raccordé par tout moyen techniquement possible au module d'émission d'impulsion 22 pour recevoir des impulsions issues de ce module 22. Ce moyen de raccordement se présente par exemple sous la forme d'un réseau informatique.

Selon encore un autre exemple de réalisation, le module d'émission d'impulsion 22 est également intégré dans le système de classification 10.

Dans un tel cas, le système de classification 10 présente un système local associé par exemple au compteur d'eau 12 de manière locale et permet par exemple de déterminer les usages de l'eau uniquement de l'objet de consommation 14 auquel ce compteur d'eau 12 est associé.

Bien entendu, d'autres exemples d'arrangement de ces différents modules 22, 24, 32, 34 et 36 sont également possibles.

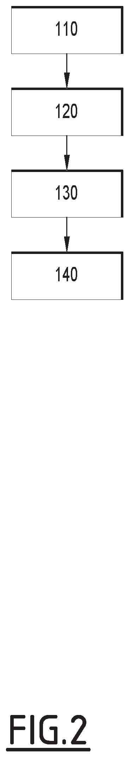

Le système de classification 10 et le système de prétraitement 20 permettent de mettre en œuvre un procédé de traitement de données qui sera désormais expliqué en référence à la figure 2 présentant un organigramme de ses étapes.

Il est considéré initialement que l'objet de consommation 14 est en cours de consommation de l'eau et que le compteur d'eau 12 détermine des volumes prédéterminés d'eau passant par la canalisation 13.

Lorsque le volume d'eau prédéterminé passe par la canalisation 13 vers l'objet de consommation 14, le module d'émission d'impulsion 22 émet alors une impulsion qui est reçue par le module de calcul 24.

Lors d'une étape initiale 110 du procédé de traitement de données, le module de calcul 24 analyse des impulsions générées par le module d'émission d'impulsion 22, par exemple dans un intervalle de temps prédéterminé.

Le but de l'analyse effectuée par le module de calcul 24 lors de cette étape consiste à déterminer des débits d'eau stabilisés.

En particulier, le module de calcul 24 détecte un débit stabilisé lorsqu'un nombre minimal d'impulsions est émis avec sensiblement la même fréquence.

Par sensiblement la même fréquence, on entend une fréquence qui s'écarte d'une valeur de fréquence constante au plus de 25%, de préférence au plus de 15% ou 10%.

Autrement dit, un débit stabilisé signifie que tous les débits consécutifs calculés à partir d'un nombre minimal d'impulsions sont compris dans une plage de valeurs. Cette plage de valeurs est par exemple déterminée par une valeur centrale +/-20%, de préférence +/-15 ou +/-10%.

Le nombre minimal d'impulsions est égal par exemple à 4.

Lors d'une étape 120 suivante, le module de calcul 24 détermine pour chaque débit stabilisé, un point de consommation.

En particulier, un point de consommation présente une structure de donnée comprenant au moins certains des éléments suivants :
- la date ;
- le débit stabilisé ;
- l'indicateur de nouveau débit stabilisé ;
- le volume d'eau consommée.

Avantageusement, chaque point de consommation comprend chacun des éléments précités. Dans certains cas, l'indicateur de nouveau débit stabilisé est optionnel.

La date de consommation correspond par exemple à la date (c'est-à-dire la date et l'heure exacte) du débit stabilisé. Alternativement, cette date peut correspondre à la fin du débit stabilisé ou alors à une date intermédiaire entre le début et la fin du débit stabilisé correspondant.

Le débit stabilisé correspond à la valeur du débit stabilisé détecté par le module de calcul 24. Ce débit stabilisé est par exemple calculé en déterminant la fréquence de répétitions des impulsions correspondantes.

L'indicateur de nouveau débit stabilisé indique s'il s'agit d'un nouveau débit stabilisé ou non.

En particulier, lorsque la valeur de débit stabilisé change par rapport à la valeur de débit stabilisé précédemment détectée, il peut s'agir soit d'un nouveau débit stabilisé soit d'un changement du débit stabilisé précédent.

Un débit stabilisé est considéré comme un nouveau débit stabilisé lorsque le temps écoulé entre deux débits stabilisés est supérieur à un seuil de nouveau débit prédéterminé. Ce seuil de nouveau débit est égal par exemple à 5 minutes.

Dans certains cas, le seuil de nouveau débit dépend du débit.

Par exemple, pour calculer un débit, le module de calcul 24 mesure le temps entre chaque pulse et pour être stable, chacun de ces débits doit être dans la plage des +/-25%, comme expliqué précédemment. À un débit défini (moyenne des 4 valeurs précédentes par exemple), une impulsion doit arriver à chaque instant t. Au bout de 2 t sans impulsion, il est considéré qu'elle n'est pas présente, que le débit change, la dernière des 4 valeurs passent à 0. Il faut répéter ce phénomène N fois (par exemple 3) pour arriver à un débit nul (2 * t * 25 / 3). Autrement dit, le temps d'attente dépend du débit : plus le débit est grand moins on attend.

Lorsqu'un nouveau débit stabilisé est détecté, son indicateur de nouveau débit prend la valeur « vrai ». Autrement, cet indicateur prend la valeur « faux ».

La valeur correspondant au volume d'eau consommée présente par exemple le volume consommé lors du débit stabilisé correspondant.

Alternativement, cette information sur le volume d'eau peut être remplacée soit par la durée du débit stabilisé correspondant soit par la date de fin de ce débit stabilisé.

Lors d'une étape 130 suivante, le module de calcul 24 transmet au système de classification 10 une série temporelle de points de consommation.

Cette série temporelle comprend par exemple un nombre représentatif de points de consommation consécutifs ou alors l'ensemble des points de consommation déterminés dans un intervalle temporel prédéterminé.

Lorsque le module de calcul 24 est raccordé au système de classification 10 via le réseau informatique 40 comme cela est illustré sur la figure 1, le module de calcul 24 peut générer une ou plusieurs trames de données compatibles avec la norme utilisée de transmission de trames dans le réseau informatique 40, pour transmettre l'ensemble des points de consommation.

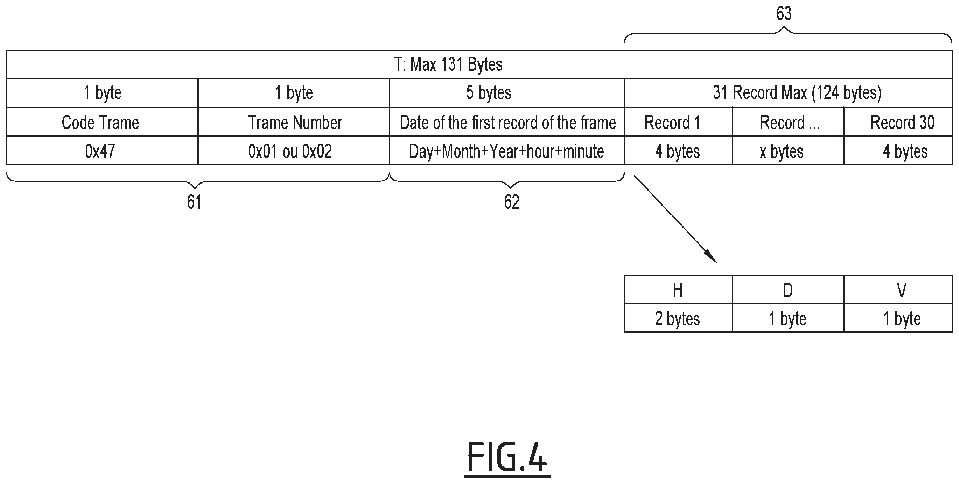

Un exemple d'une telle trame T est illustré sur la figure 4.

Ainsi, selon cet exemple, la trame T générée par le module de calcul 24 comprend un champ d'identification 61, un champ d'horodatage 62 et un champ de données utiles 63.

Le champ d'identification 61 permet notamment d'identifier la trame et comprend par exemple un code de la trame et/ou un numéro de la trame.

Le champ d'horodatage 62 comprend une date complète associée à la trame qui correspond par exemple à la date complète du premier point de consommation qui doit être transmis par la trame.

Le champ de données utiles 63 comprend par exemple des informations relatives à un nombre limité de points de consommation. Ce nombre limité est égal par exemple à 31. Lorsque le nombre de points de consommation excède cette limite, les points de consommations restants sont écrits dans une autre trame.

L'ensemble des informations sur chacun des points de consommation forme un enregistrement qui est appelé dans l'exemple de la figure 4 par le terme « Record ».

Chaque enregistrement peut comprendre les informations complètes relatives au point de consommation correspondant ou des informations abrégées. Dans ce dernier cas, les informations complètes relatives à chaque point de consommation peuvent être déduites en analysant les informations abrégées relatives à plusieurs points de consommation. Cela permet notamment d'obtenir des enregistrements particulièrement courts qui peuvent être transmis via un moyen de communication à débit limité. Autrement dit, cela permet une compression de données de consommation.

Dans l'exemple de la figure 4, chaque enregistrement associé à un point de consommation s'étend sur 4 octets et comprend les informations suivantes :
- informations sur le point de consommation (4 bits) : champ H sur la figure 4 ;
- informations d'horodatage (12 bits) : champ H sur la figure 4 ;
- débit d'eau en L/h (1 octet) du point de consommation correspondant : champ D sur la figure 4 ;
- volume d'eau consommée en L (1 octet) du point de consommation correspondant : champ V sur la figure 4.

Les informations sur le point de consommation peuvent comprendre les éléments suivants :
- l'indicateur de nouveau débit (1 bit : « 1 » s'il s'agit d'un nouveau débit, « 0 » autrement) ;
- l'indicateur d'arrêt de débit suite à une fermeture ;
- le gain de débit ;
- le gain de volume.

En particulier, lorsque l'indicateur d'arrêt de débit suite à une fermeture prend la valeur « vrai », il est considéré qu'il n'y a pas de fuite car l'accès d'eau est fermé dans le point de consommation correspondant. Autrement, une fuite est détectée.

Les gains de débit et de volume présentent un moyen de comprimer les données comme les informations d'horodatage. Par exemple, au lieu d'horodater chaque point de consommation, il est possible juste d'horodater un premier point de consommation et de garder pour les autres un delta de temps par rapport à ce premier point ainsi que les gains de débit et/ou de volume correspondants.

Les informations d'horodatage peuvent comprendre le nombre de minutes écoulées avant le début du débit stabilisé correspondant à partir de la date indiquée dans le champ d'horodatage 62.

La trame telle qu'illustrée sur la figure 4 permet alors de stocker les informations relatives au point de consommation de manière particulièrement compacte ce qui permet de transmettre cette trame via le réseau informatique 40 de manière particulièrement efficace et rapide.

Bien entendu, de nombreuses autres formes de trames et de représentations de structures de données permettant de transmettre les informations sur les points de consommation sont également possibles.

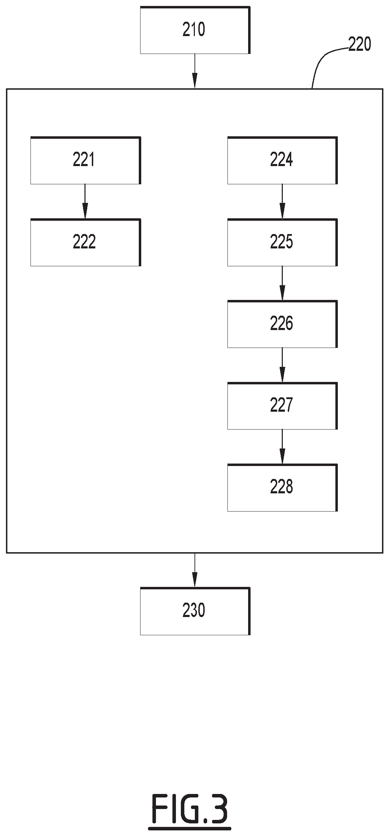

Lors d'une étape 140 suivante, le système de classification 10 met en œuvre un procédé de classification d'usages de l'eau qui sera désormais expliqué en référence à la figure 3 présentant un organigramme de ses étapes.

Lors d'une étape initiale 210 du procédé de classification, le module d'entrée 32 reçoit la série temporelle comprenant les points de consommation tels qu'expliqués précédemment.

Lors de cette étape, le module d'entrée 32 reçoit par exemple la trame telle que décrite en relation avec la figure 4, via le réseau informatique 40.

Avantageusement, le module d'entrée 32 peut recevoir plusieurs trames telles que décrites précédemment.

Le module d'entrée 32 extrait ensuite les points de consommation de la ou de chaque trame reçue et regroupe ces points de consommation en fonction de l'objet de consommation 14 auquel ils se rapportent. Par la suite, il sera considéré que l'ensemble des points de consommation reçus se rapportent à un même objet de consommation 14.

À la fin de cette étape 210, le module d'entrée 32 transmet l'ensemble des points de consommations reçus au module de traitement 34.

Lors d'une étape 220 suivante, le module de traitement 34 traite les points de consommation reçus pour déterminer les usages de l'eau qui correspondent à l'objet de consommation 14.

L'étape de traitement 220 comprend une pluralité de sous-étapes.

En particulier, lors d'une sous-étape 221, le module de traitement 34 détermine des points de consommation isolés.

En particulier, par un point de consommation isolé, on entend un point de consommation qui est espacé temporellement de chacun des autres points de consommation d'une distance supérieure à un seuil d'espacement prédéterminé.

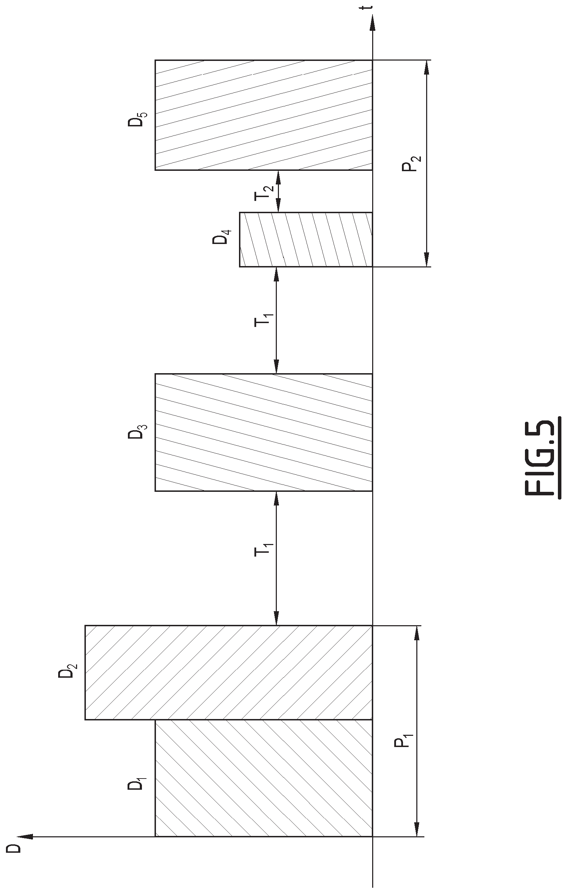

La figure 5 illustre 5 points de consommation correspondant à 5 débits stabilisés D1 à D5. Ces débits stabilisés sont disposés consécutivement sur l'échelle temporelle t en fonction de la date associée à chaque débit.

Dans l'exemple de cette figure, le point de consommation associé au débit stabilisé D3 est espacé temporellement de chacun des débits stabilisés D2 et D4, d'une valeur T1 supérieure à la valeur TS présentant ledit seuil d'espacement.

Ainsi, dans cet exemple, le point de consommation associé à ce débit stabilisé D3 est considéré comme un point de consommation isolé.

Lors d'une sous-étape suivante 222, le module de traitement 34 détermine pour chaque point de consommation isolé un usage le plus probable.

Pour cela, le module de traitement 34 peut par exemple consulter une base de données externe comprenant des valeurs typiques de consommation de différents dispositifs de l'objet de consommation 14.

Par exemple, en fonction du volume consommé dans ce point de consommation, le module de traitement 34 peut déterminer qu'il s'agit d'un usage isolé tel que par exemple les WC.

Lors d'une sous-étape 224 mise en œuvre par exemple de manière parallèle aux étapes 221 et 222, le module de traitement 34 construit des motifs (connus plus couramment sous le terme anglais de « patterns ») de consommation à partir d'au moins deux points de consommation présentant un espacement temporel inférieur au seuil d'espacement prédéterminé tel que défini précédemment.

Dans l'exemple de la figure 5, deux patterns, à savoir patterns P1 et P2, sont déterminés.

En particulier, dans le cas du pattern P1 qui est formé de points de consommation associés aux débits stabilisés D1 et D2, les deux débits stabilisés D1 et D2 sont adjacents l'un à l'autre. L'espacement temporel entre ces points est donc inférieur au seuil d'espacement prédéterminé et ils sont considérés dans un même pattern.

Dans le cas du pattern P2, les points de consommation associés aux débits stabilisés D4 et D5 sont espacés l'un de l'autre d'une valeur T2 qui est supérieure à 0 mais inférieure au seuil d'espacement prédéterminé TS. Ces deux points de consommation sont donc considérés dans un même pattern P2.

La taille du pattern est déterminée par le nombre de points de consommation présents dans celui-ci.

Ainsi, dans l'exemple de la figure 5, les deux patterns P1 et P2 comprennent chacun deux points de consommation et forment chacun donc un pattern de taille 2.

Lors d'une sous-étape 225 suivante, le module de traitement 34 détermine des patterns présentant des superpositions des débits stabilisés.

En particulier, il est considéré qu'au moins deux débits stabilisés se superposent lorsque les points de consommation correspondants se suivent sur l'axe temporel et lorsque l'indicateur de nouveau débit stabilisé de l'un de ces points est égal à la valeur « faux ».

Dans l'exemple de la figure 5, le pattern P1 présente une superposition de deux débits stabilisés D1 et D2.

Pour chaque pattern de consommation comprenant une telle superposition, le module de traitement 34 effectue lors de cette sous-étape 225 une dissociation du pattern de consommation en au moins deux patterns de consommation sans superposition.

Ces patterns sans superposition sont déterminés par détermination de toutes les combinaisons possibles de sous-patterns sans superposition.

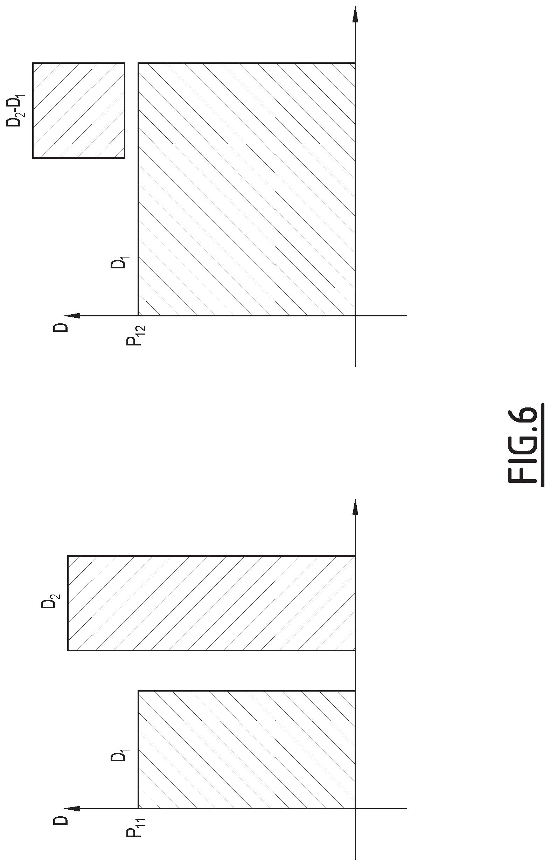

Ainsi, la figure 6 illustre des sous-patterns à savoir les sous-patterns P11 et P12 formés suite à la dissociation du pattern P1 de la figure 5.

En particulier, le sous-pattern P11 est formé de deux débits stabilisés, à savoir D1 et D2, qui sont indépendants entre eux.

Le pattern P12 quant à lui fait apparaitre le débit D1 et le débit D2-D1 qui sont indépendants entre eux.

À la fin de la sous-étape 225, l'ensemble des sous-patterns dissociés sont considérés comme des patterns indépendants.

Lors d'une sous-étape 226 suivante, le module de traitement 34 trie l'ensemble des patterns obtenus en fonction de leur taille.

Lors d'une sous-étape 227 suivante, le module de traitement 34 effectue un partitionnement des patterns (« clustering » en anglais) pour obtenir une pluralité de grappes (« clusters » en anglais).

Avantageusement, ce partitionnement est effectué par une technique de partitionnement hiérarchique qui comprend le calcul de distances entre les patterns voisins après le tri.

En particulier, un tel partitionnement est effectué en faisant des calculs de distances entre les patterns voisins, puis par regroupement deux à deux hiérarchiquement puis par arrêt de la hiérarchisation dès que les distances entre les patterns dépassent un seuil.

Lors d'une sous-étape 228 suivante, le module de traitement 34 associe à au moins certaines des grappes obtenues des usages les plus probables.

Avantageusement, le module de traitement 34 associe des usages probables seulement aux grappes de taille supérieure à un seuil prédéterminé.

Pour associer les usages les plus probables, le module de traitement 34 analyse les grappes de patterns correspondants avec des patterns prédéterminés qui sont associés à ces usages.

Pour ce faire, un modèle de probabilité connu en soi peut être utilisé pour représenter des sous populations normalement distribuées à l'intérieur d'une population globale.

Ainsi, par exemple, une grappe de patterns comprenant des débits stabilisés espacés selon des intervalles temporels particuliers, peut présenter un cycle de lavage d'un lave-linge ou d'un lave-vaisselle.

Selon d'autres modes de réalisation, l'association des usages particuliers à des grappes de patterns différentes peut être effectuée par des méthodes d'intelligence artificielle en utilisant par exemple des bases d'apprentissage et des méthodes entrainées sur ces bases d'apprentissage.

Dans certains exemples, après l'association des usages particuliers à des grappes de patterns différentes, le module de traitement 34 réitère l'étape 220 relative aux points de consommation isolés en appliquant par exemple un modèle de type GMM (de l'anglais « generalized method of moments ») ou un modèle de mélange de gaussienne.

À la fin de l'étape 220, le module de traitement 34 détermine ainsi l'ensemble des usages associés aux différents points de consommation.

Lors d'une étape 230 suivante, le module de sortie 36 transmet la classification obtenue, c'est-à-dire les usages associés aux points de consommation correspondants à l'interface 50.

Lors de cette étape, l'utilisateur a alors une possibilité de corriger la classification des usages proposés. Ces corrections peuvent être prises en compte lors d'une prochaine itération du procédé de traitement de données en relation avec le même objet de consommation 14.

Bien entendu, de nombreux autres modes de réalisation de la présente invention sont également possibles.

## Revendications

1. Procédé de classification d'usages de l'eau d'au moins un objet de consommation (14), comprenant les étapes suivantes :
- obtention (210) d'une série temporelle de points de consommation, chaque point de consommation comprenant des données de consommation d'eau relatives à l'objet de consommation (14) comprenant une date, un débit stabilisé et un volume de l'eau consommée, le débit stabilisé étant calculé à partir d'un nombre minimal d'impulsions temporelles successives émises avec sensiblement une même fréquence par un compteur de consommation d'eau (12) associé à l'objet de consommation (14), chaque impulsion représentant la consommation d'un volume prédéfini d'eau ;
- traitement (220) des points de consommation pour déterminer des usages de l'eau.

2. Procédé selon la revendication 1, dans lequel l'étape de traitement (220) comprend les sous-étapes suivantes :
- détermination (221) de points de consommation isolés ;
- à chaque point de consommation isolé, association (222) d'un usage le plus probable.

3. Procédé selon la revendication 2, dans lequel chaque point de consommation isolé est déterminé en comparant l'espacement temporel de ce point de consommation avec d'autres points de consommation, avec un seuil d'espacement prédéterminé.

4. Procédé selon l'une quelconque des revendications précédentes, dans lequel l'étape de traitement (220) comprend en outre les sous-étapes suivantes :
- constructions (224) de motifs de consommation à partir d'au moins deux points de consommation présentant un espacement temporel inférieur à un seuil d'espacement prédéterminé ;
- pour chaque motif de consommation comprenant au moins une superposition de débits stabilisés, dissociation (225) du motif de consommation en au moins deux motifs de consommation sans superposition ;
- partitionnement (227) de motifs de consommation pour obtenir une pluralité de grappes ;
- association (228) d'au moins certaines des grappes à un usage de l'eau le plus probable.

5. Procédé selon la revendication 4, dans lequel, ladite dissociation du motif de consommation en au moins deux motifs de consommation sans superposition s'effectue par détermination de toutes les combinaisons possibles de sous-motifs sans superposition.

6. Procédé selon la revendication 4 ou 5, dans lequel l'étape de traitement (220) comprend en outre une sous-étape (226) de tri des motifs de consommation en fonction de la taille de ces motifs.

7. Procédé selon la revendication 6, dans lequel le partitionnement est effectué par une technique de partitionnement hiérarchique comprenant le calcul de distances entre les motifs de consommation voisinant après le tri.

8. Procédé selon l'une quelconque des revendications 4 à 7, dans lequel seules les grappes de taille supérieure à un seuil prédéterminé sont associées à des usages.

9. Programme d'ordinateur comportant des instructions logicielles qui, lorsqu'elles sont exécutées par un ordinateur, mettent en œuvre le procédé selon l'une quelconque des revendications précédentes.

10. Système de classification comprenant des moyens techniques (32, 34, 36) configurés pour mettre en œuvre le procédé de classification selon l'une quelconque des revendications 1 à 8.

11. Procédé de traitement de données relatives à la consommation de l'eau d'au moins un objet de consommation (14), comprenant les étapes suivantes :
- analyse (110) des impulsions issues d'un compteur de consommation d'eau (12) associé à l'objet de consommation (14) pour détecter des débits stabilisés, chaque impulsion représentant la consommation d'un volume prédéfini d'eau ;
- pour chaque débit stabilisé, détermination (120) d'un point de consommation comprenant la date de ce débit stabilisé, ce débit stabilisé et un volume de l'eau consommée ;
- transmission (130) d'une série temporelle de points de consommation ;
- mise en œuvre (140) du procédé de classification selon l'une quelconque des revendications 1 à 8.
